# EUROPÄISCHE PATENTSCHRIFT

(11) **EP 4 147 095 B1**
(45) Veröffentlichungstag und Bekanntmachung des Hinweises auf die Patenterteilung: **26.03.2025**
(21) Anmeldenummer: 21723192.7
(22) Anmeldetag: 29.04.2021
(51) Int. Cl.: G04B 47/04, A44C 17/02

(54) **UHRGLAS MIT EINEM DEKORATIVEN ELEMENT**
WATCH GLASS WITH A DECORATIVE ELEMENT
VERRE DE MONTRE AVEC UN ÉLÉMENT DÉCORATIF

(30) Priorität: 08.05.2020 DE 102020112541
(43) Veröffentlichungstag der Anmeldung: 15.03.2023
(73) Patentinhaber: Realization Desal AG, 6317 Oberwil (CH)
(72) Erfinder: BONKE, Michael, 6317 Oberwil bei Zug (CH)
(74) Vertreter: Hoefer & Partner Patentanwälte mbB
(86) Internationale Anmeldenummer: PCT/EP2021/061341
(87) Internationale Veröffentlichungsnummer: WO 2021/224117

(56) Entgegenhaltungen:
- EP-A1- 0 098 240
- EP-A1- 2 901 883
- EP-B1- 0 098 240
- FR-A1- 2 646 759

## Beschreibung

Die Erfindung betrifft ein Uhrglas mit einem dekorativen Element sowie eine Uhr mit einem derartigen Uhrglas.

Uhrgläser mit dekorativen Elementen sind z.B. aus DE 10 2015 207 049 A1 bekannt. Die EP 0 098 240 A1 offenbart ein Uhrglas mit einer Grundplatte, einer zweiten Platte, und einem oder mehreren Diamanten. Die Grundplatte und die zweite Platte sind miteinander verklebt. Die Kalette eines Diamanten ist in eine Ausnehmung des Uhrglases eingeklebt.

Es ist Aufgabe der vorliegenden Erfindung, ein Uhrglas mit einem dekorativen Element zu schaffen, wobei das dekorative Element in sicherer Weise am Uhrglas befestigt ist.

Die Lösung dieser Aufgabe erfolgt durch ein Uhrglas mit den Merkmalen des unabhängigen Anspruchs. Die abhängigen Ansprüche enthalten vorteilhafte Weiterbildungen und Ausgestaltungen der Erfindung.

Das Uhrglas umfasst ein erstes Glas, ein zweites Glas, welches mit dem ersten Glas über eine verbindende Zwischenschicht verbunden ist, eine Uhrglasausnehmung, die durch eine erste Ausnehmung im ersten Glas und eine zweite Ausnehmung im zweiten Glas gebildet ist, und ein dekoratives Element. Das dekorative Element ist in eine Fassung eingesetzt, welche in der Uhrglasausnehmung angeordnet ist. Dabei ist ein Raum der Uhrglasausnehmung, der durch das erste Glas, das zweite Glas und die Fassung definiert ist, mit Verbindungsmaterial der verbindenden Zwischenschicht gefüllt, so dass die Fassung über das Verbindungsmaterial mit dem ersten Glas und dem zweiten Glas verbunden ist.

Durch das Vorsehen des ersten und des zweiten Glases, die über die verbindende Zwischenschicht miteinander verbunden sind, wird ein stabiles Uhrglas geschaffen. Insbesondere wird durch diese Struktur erzielt, dass potentielle Mikrorisse, die durch das Formen der ersten Ausnehmung im ersten Glas und der zweiten Ausnehmung im zweiten Glas entstehen können, an der verbindenden Zwischenschicht enden. Somit können die Mikrorisse des einen Glases nicht auf das andere Glas übertragen werden. Wegen der Kontaktierung der Gläser mit der verbindenden Zwischenschicht, die im Vergleich zu den Gläsern eine größere Elastizität aufweist, kann ferner bei einem potentiellen Anschlagen des dekorativen Elements und/oder der Fassung die Anschlagenergie über die verbindende Zwischenschicht auf beide

Gläser verteilt und von diesen aufgefangen werden. Dies ist insbesondere von Vorteil, wenn das Uhrglas ein großes dekoratives Element und somit auch eine entsprechend große Uhrglasausnehmung aufweist.

Zur Bruchfestigkeit des Uhrglases trägt insbesondere das Verbindungsmaterial der verbindenden Zwischenschicht im Raum der Uhrglasausnehmung zwischen dem ersten Glas, dem zweiten Glas und der Fassung bei. Der Grund dafür ist, dass durch das Verbindungsmaterial in diesem Raum ein direkter Kontakt zwischen der Fassung, die insbesondere aus Metall sein kann, und dem Uhrglas vermieden wird. Somit wird das Risiko eines Absplitterns der Gläser an der Stelle der Uhrglasausnehmung deutlich reduziert bzw. eliminiert.

Die verbindende Zwischenschicht und insbesondere deren Verbindungsmaterial im Raum der Uhrglasausnehmung zwischen dem ersten Glas, dem zweiten Glas und der Fassung ermöglicht ferner eine feste Anbindung der Fassung und somit auch eine feste Anordnung des dekorativen Elements am Uhrglas.

Des Weiteren bietet die vorliegende Erfindung den Vorteil eines wasserdichten Uhrglases, da durch Adhäsion- und/oder Vernetzungseffekte die Fassung an den Gläsern und die Gläser aneinander wasserdicht anliegen.

Außerdem können durch die verbindende Zwischenschicht potentielle Flächenabweichungen der Gläser ausgeglichen werden, wodurch sich eine sehr stabile Verbindung der Gläser ergibt.

Aus der obigen Diskussion ergibt sich, dass im Rahmen der Erfindung die verbindende Zwischenschicht in vorteilhafter Weise sowohl Verbindungsmaterial, welches sich zwischen gegenüberliegenden Flächen der Gläser befindet, als auch Verbindungsmaterial, welches sich in Raum der Uhrglasausnehmung zwischen dem ersten Glas, dem zweiten Glas und der Fassung befindet, umfasst. Mit anderen Worten sind das Verbindungsmaterial zwischen den gegenüberliegenden Flächen der Gläser und das Verbindungsmaterial im bereits beschriebenen Raum in vorteilhafter Weise als eine einheitliche/kontinuierliche verbindende Zwischenschicht zu verstehen, die dazu dient, sowohl das erste Glas mit dem zweiten Glas als auch die Fassung mit den Gläsern zu verbinden.

Ferner bedeutet die Formulierung, dass der Raum der Uhrglasausnehmung zwischen dem ersten Glas und dem zweiten Glas mit Verbindungsmaterial der verbindenden Zwischenschicht gefüllt ist, in vorteilhafter Weise, dass der Raum vollständig gefüllt ist.

Die Formulierung, dass die Fassung in der Uhrglasausnehmung angeordnet ist, bedeutet insbesondere, dass die Fassung sowohl in der ersten Ausnehmung als auch in der zweiten Ausnehmung positioniert ist.

Die Fassung ist insbesondere eine Metallfassung, wie beispielsweise eine Goldfassung, Platinfassung, Silberfassung oder Edelstahlfassung.

In der Fassung steht das dekorative Element in vorteilhafter Weise in direktem Kontakt nur mit Luft und/oder der Fassung. Das heißt, dass das dekorative Element weder die Gläser noch die verbindende Zwischenschicht direkt kontaktiert. Ein direkter Kontakt zwischen zwei kontaktierenden Bauteilen liegt vor, wenn kein weiteres Bauteil oder Verbindungsmaterial zwischen den kontaktierenden Bauteilen in der Verbindungsrichtung vorgesehen ist.

Vorzugsweise umgibt die Fassung das dekorative Element teilweise, so dass ein Teil, insbesondere ein oberer Teil, des dekorativen Elements, durch kein weiteres Bauteil verdeckt ist.

Insbesondere steht das dekorative Element teilweise in direktem Kontakt mit der Fassung. Vorzugsweise steht das dekorative Element unterhalb eines Kontaktbereichs des dekorativen Elementes mit der Fassung in direktem Kontakt mit Luft.

In vorteilhafter Weise ist das erste Glas auf dem zweiten Glas angeordnet.

Im Rahmen der vorliegenden Erfindung wird als erstes Glas das Glas bezeichnet, auf welches das Licht zuerst trifft, wenn das Uhrglas in einer Uhr angeordnet ist. Entsprechend wird als zweites Glas das Glas bezeichnet, welches einem Innenraum eines Gehäuses der Uhr bzw. dem Zifferblatt zugewandt ist.

Das erste Glas und das zweite Glas sind vorzugsweise jeweils als Glasscheibe ausgebildet. Dabei sind das erste Glas und das zweite Glas vorzugsweise über die verbindende Zwischenschicht flächig miteinander verbunden.

Insbesondere ist das erste Glas aus Saphirglas ausgebildet.

Die verbindende Zwischenschicht ist insbesondere zwischen dem ersten Glas und dem zweiten Glas, insbesondere zwischen gegenüberliegenden Flächen der Gläser, angeordnet.

Im Rahmen der Erfindung kann die zum zweiten Glas zugewandte Fläche des ersten Glases insbesondere auch als Unterseite des ersten Glases bezeichnet werden. Entsprechend kann im Rahmen der Erfindung die zum ersten Glas zugewandte Fläche des zweiten Glases insbesondere auch als Oberseite des zweiten Glases bezeichnet werden.

Durch die verbindende Zwischenschicht sind das erste Glas und das zweite Glas stoffschlüssig miteinander verbunden.

Vorzugsweise ist eine maximale Dicke der verbindenden Zwischenschicht zwischen dem ersten Glas und dem zweiten Glas in der Dickenrichtung der Gläser kleiner als eine maximale

Dicke des Verbindungsmaterials der verbindenden Zwischenschicht im Raum zwischen dem ersten Glas, dem zweiten Glas und der Fassung in der Dickenrichtung der Gläser.

Bevorzugt ist eine maximale Dicke der verbindenden Zwischenschicht zwischen dem ersten Glas und dem zweiten Glas in der Dickenrichtung der Gläser kleiner als eine maximale Dicke des Verbindungsmaterials der verbindenden Zwischenschicht im Raum zwischen dem ersten Glas, dem zweiten Glas und der Fassung in einer zur Dickenrichtung der Gläser senkrechten Richtung.

Vorzugsweise weist das Verbindungsmaterial im Raum zwischen dem ersten Glas, dem zweiten Glas und der Fassung eine maximale Dicke in der Dickenrichtung der Gläser und/oder in einer zur Dickenrichtung der Gläser senkrechten Richtung von mindestens 2 mm, vorzugsweise mindestens 3 mm, ferner bevorzugt mindestens 4 mm, besonders bevorzugt mindestens 5 mm, auf.

Vorzugsweise kann die verbindende Zwischenschicht aus einer organischen oder anorganischen Verbindungs- oder Klebemasse oder Adhäsionsschicht oder einer elastischen Folie (auch: Laminierfolie oder Verbundfolie, insbesondere Klebefolie) ausgebildet sein.

Beispielsweise kann die verbindende Zwischenschicht aus einer EVA-Laminierfolie (Ethylen-Vinylacetatcopolymer-Laminierfolie) oder einer PVB-Laminierfolie (Polyvinylbutyral-Laminierfolie) oder einer PU-Laminierfolie (Polyurethan-Laminierfolie) ausgebildet sein.

Insbesondere kann die verbindende Zwischenschicht aus Gießharz ausgebildet sein. Das Gießharz kann z.B. ein Zweikomponenten-Epoxidharz oder ein UV-aushärtender Einkomponentenkleber oder ein vernetzendes hochtransparentes Silikon sein.

Die verbindende Zwischenschicht ist in vorteilhafter Weise transparent. Da die verbindende Zwischenschicht nicht oder kaum sichtbar ist, wird dem Uhrglas und somit auch der Uhr ein besonders elegantes Erscheinungsbild verliehen.

Das dekorative Element ist vorzugsweise ein Schmuckstein, insbesondere ein Edelstein oder Halbedelstein, besonders bevorzugt ein Diamant. Insbesondere kann der Schmuckstein natürlich oder synthetisch sein.

Als Schmuckstein ist im Rahmen der Erfindung ein geschliffener Stein, insbesondere mit optischen Eigenschaften, wie z.B. Transparenz, zu verstehen. Der Schmuckstein kann insbesondere facettiert sein.

Ferner wird im Rahmen der Erfindung ein Edelstein insbesondere als ein Schmuckstein verstanden, welcher die folgenden vier Kriterien erfüllt:
1. Seltenheit
2. Mohshärte (Edelsteinhärte) größer gleich 5, bevorzugt größer gleich 6, besonders bevorzugt größer gleich 7
3. Transparenz
4. Brechungsindex größer gleich 1,56, bevorzugt größer gleich 1,7

Insbesondere sind Diamanten, Rubine, Saphire und Smaragde Edelsteine.

Ein Diamant hat in vorteilhafter Weise eine Mohshärte von 10 und einen Brechungsindex von 2,42.

Ein Glasteil wird bei der vorliegenden Erfindung wegen seiner chemischen Zusammensetzung und Struktur insbesondere nicht als Schmuckstein (Halbedelstein, Edelstein oder sonstiger Schmuckstein) verstanden, auch wenn das Glasteil aus einem Material (Ausgangsmaterial) besteht, welches im Rohzustand als Schmuckstein (Halbedelstein, Edelstein oder sonstiger Schmuckstein) eingestuft wird. Das Glasteil kann beispielsweise ein Quarzglas sein, wobei das Quarzglas nicht zu den Schmucksteinen zählt, auch wenn Quarz (Ausgangsmaterial) ein Schmuckstein ist.

Nach einer alternativen vorteilhaften Ausführungsform des Uhrglases kann das dekorative Element eine Metalleinlage, beispielsweise eine Goldeinlage, sein.

Wenn das Uhrglas eine Mehrzahl von dekorativen Elementen aufweist, ist jede beliebige Kombination aus Halbedelsteinen, Edelsteinen, sonstigen Schmucksteinen und Metalleinlagen möglich.

Insbesondere kann ein Bereich der Fassung das erste Glas und/oder das zweite Glas direkt kontaktieren.

Vorzugsweise ist die Fassung rotationssymmetrisch ausgebildet.

Bevorzugt weist die Fassung mindestens eine Aussparung auf, die in einer Mantelfläche der Fassung ausgebildet ist.

Die Aussparung ist in vorteilhafter Weise mit Verbindungsmaterial der verbindenden Zwischenschicht gefüllt. Somit ist eine große Menge des Verbindungsmaterials zum Befestigen der Fassung am Uhrglas vorhanden. Insbesondere wird durch die mindestens eine Aussparung eine Kontaktfläche zwischen der Fassung und der verbindenden Zwischenschicht vergrößert, wodurch auch große Fassungen bzw. dekorative Elemente in sicherer Weise am Uhrglas befestigt werden können.

Insbesondere ist eine Vielzahl von zuvor beschriebenen Aussparungen in der Mantelfläche der Fassung ausgebildet.

Die mindestens eine Aussparung kann nach einer bevorzugten Ausgestaltung der Erfindung als Vertiefung, insbesondere Nut, ausgebildet sein. Die Vertiefung kann vorzugsweise umlaufend, insbesondere vollständig umlaufend, d.h., über 360 Grad, ausgebildet sein.

Nach einer alternativen vorteilhaften Ausgestaltung der Erfindung kann die mindestens eine Aussparung als Loch ausgebildet sein.

Das Loch kann besonders bevorzugt durchgehend sein. Somit kann das Verbindungsmaterial im durchgehenden Loch mit dem Verbindungsmaterial im Raum der Uhrglasausnehmung zwischen dem ersten Glas, dem zweiten Glas und der Mantelfläche der Fassung miteinander verbunden sein. Somit wird die Fassung nicht nur über Verbindungsmaterial an ihrer Mantelfläche gehalten, sondern auch über Verbindungsmaterial, welches durch die Fassung hindurchgeht. Letzteres verstärkt die Anbindung der Fassung am Uhrglas, wodurch sich die Fassung von der Uhrglasausnehmung auch bei einem starken Anschlagen der Fassung, z.B. bei einem Runterfallen der Uhr, nicht lösen kann.

Insbesondere wenn bei der Fassung eine Vielzahl von durchgehenden Löchern vorgesehen ist, können sich die Löcher vorzugsweise gitterartig überschneiden. Somit kann auch ein Gitter aus Verbindungsmaterial gebildet sein.

Erfindungsgemäß weist die Fassung einen ersten Fassungsbereich und einen zweiten Fassungsbereich auf. Dabei ist der Raum der Uhrglasausnehmung zwischen dem ersten Glas, dem zweiten Glas, dem ersten Fassungsbereich und dem zweiten Fassungsbereich in vorteilhafter Weise mit Verbindungsmaterial gefüllt.

Erfindungsgemäß ist/sind der erste Fassungsbereich und/oder der zweite Fassungsbereich zu einer zu den Gläsern senkrechten Achse geneigt.

"Geneigt" bedeutet in vorteilhafter Weise, dass sich der jeweilige Fassungsbereich nicht parallel zu einer zu den Gläsern senkrechten Achse erstreckt.

Die zu den Gläsern senkrechte Achse ist insbesondere parallel zur Dickenrichtung der Gläser.

Besonders bevorzugt ist/sind der erste Fassungsbereich und/oder der zweite Fassungsbereich konisch ausgebildet.

Der erste Fassungsbereich und der zweite Fassungsbereich definieren vorteilhafterweise einen Zwischenraum, der im montierten Zustand teilweise oder vollständig mit einem Bereich des Raums der Uhrglasausnehmung zwischen dem ersten Glas, dem zweiten Glas und der Fassung übereinstimmt. Das heißt, dass dieser Zwischenraum im angeordneten Zustand der Fassung in der Uhrglasausnehmung mit Verbindungsmaterial der verbindenden Zwischenschicht gefüllt ist.

Vorzugsweise weist der zweite Fassungsbereich eine größere Neigung als der erste Fassungsbereich auf. Mit anderen Worten ist der zweite Fassungsbereich vorzugsweise stärker geneigt zu der zu den Gläsern senkrechten Achse als der erste Fassungsbereich.

Vorzugsweise ist ein Winkel zwischen dem ersten Fassungsbereich und dem zweiten Fassungsbereich kleiner als 90 Grad, vorzugsweise zwischen 10 Grad und 50 Grad, besonders bevorzugt zwischen 20 Grad und 40 Grad.

In vorteilhafter Weise weist das Verbindungsmaterial der verbindenden Zwischenschicht im Raum zwischen dem ersten Glas, dem zweiten Glas und der Fassung in einem Schnitt senkrecht zu den Gläsern einen dreieckförmigen Querschnitt auf. Die Schnittebene ist insbesondere durch die Dickenrichtung der Gläser und die zur Dickenrichtung senkrechten Richtung definiert.

Insbesondere ist der erste Fassungsbereich dem Innenraum des Gehäuses der Uhr abgewandt, wenn die Fassung in der Uhrglasausnehmung angeordnet ist. Dabei ist der zweite Fassungsbereich insbesondere dem Innenraum des Gehäuses zugewandt.

Des Weiteren weist der erste Fassungsbereich eine Öffnung auf, durch die das dekorative Element in die Fassung einsetzbar ist.

Insbesondere ist sowohl die erste Ausnehmung als auch die zweite Ausnehmung durchgängig ausgebildet.

Bevorzugt ragt der zweite Fassungsbereich über eine Unterseite des zweiten Glases, insbesondere maximal um 20%, bevorzugt maximal um 10%, besonders bevorzugt maximal um 5 %, einer Dicke des Uhrglases, hinaus.

Im Rahmen der vorliegenden Erfindung entspricht die Dicke des Uhrglases insbesondere der Summe aus den Dicken des ersten Glases, des zweiten Glases und der verbindenden Zwischenschicht im Bereich zwischen dem ersten Glas und dem zweiten Glas.

Nach einer alternativen vorteilhaften Ausgestaltung der Erfindung endet der zweite Fassungsbereich in der Uhrglasausnehmung. Das heißt, dass der zweite Fassungsbereich nicht über die Unterseite des zweiten Glases vorsteht.

Insbesondere kann ein Endbereich des zweiten Fassungsbereichs bündig mit der Unterseite des zweiten Glases sein. Dabei ist als "Endbereich" insbesondere der Teil des zweiten Fassungsbereichs zu verstehen, welcher den größten Abstand in Dickenrichtung der Gläser von der Oberseite des ersten Glases aufweist.

Da das dekorative Element gar nicht oder nur wenig über das zweite Glas hinausragt, kann auch das Gehäuse der Uhr kompakt ausgebildet sein bzw. mehr Platz für das Uhrwerk, die Zeiger und das Zifferblatt im Gehäuse zur Verfügung stehen. Die Bewegung der Zeiger ist somit nicht beeinträchtigt, wobei auch eine Gestaltungsfreiheit des Zifferblattes gewährleistet ist.

Vorzugsweise weist das dekorative Element ein Maß parallel zur Dickenrichtung der Gläser auf, welches mindestens 50%, bevorzugt mindestens 80%, besonders bevorzugt über 100%, einer Dicke des Uhrglases beträgt. Entsprechendes gilt vorzugsweise auch für die Fassung.

Das dekorative Element kann vorzugsweise eine Querschnittfläche senkrecht zur Dickenrichtung aufweisen, die mindestens 1/20, bevorzugt mindestens 1/16, besonders bevorzugt mindestens 1/10, einer Fläche der Oberseite des ersten Glases beträgt.

Wenn das dekorative Element ein Schmuckstein ist, weist der Schmuckstein vorzugsweise ein Gewicht von mindestens 2 Karat, bevorzugt von mindestens 3 Karat, bevorzugt von mindestens 4 Karat, besonders bevorzugt von mindestens 5 Karat, auf. Es sei angemerkt, dass das Gewicht eines Schmucksteins insbesondere ein Indikator für seine Größe ist. Das heißt, dass ein Schmuckstein einer Art (z.B. Brillant) größer als ein Schmuckstein derselben Art (im Rahmen des Beispiels auch Brillant), welches aber ein kleineres Gewicht aufweist. Dies bedeutet, dass auch eine Querschnittfläche eines Schmucksteins (derselben Art) senkrecht zur Dickenrichtung mit zunehmendem Gewicht zunimmt. Ein Karat entspricht 0,2 Gramm (2 x 10⁻⁴ kg).

Ein dekoratives Element mit der zuvor angegebenen Querschnittsfläche bzw. ein Schmuckstein mit dem zuvor angegebenen Gewicht sind im Rahmen der Erfindung insbesondere als ein großes dekoratives Element zu verstehen. Durch die Verwendung eines großen dekorativen Elementes wird das Erscheinungsbild des Uhrglases geprägt.

Nach einer alternativen Ausgestaltung der Erfindung kann das dekorative Element ein Schmuckstein mit einem Gewicht von kleiner als 2 Karat sein. Beispielsweise kann der Schmuckstein ein Gewicht von 0,1 Karat, 0,15 Karat, 0,5 Karat oder 1 Karat aufweisen.

Es ist natürlich auch möglich, dass beim Uhrglas mehrere dekorative Elemente, insbesondere mehrere Schmucksteine, vorgesehen sind. Bei einem solchen Uhrglas ist hinsichtlich der Gewichte der dekorativen Elemente, insbesondere der Schmucksteine, jede beliebige Kombination möglich. So kann z.B. ein zentraler, insbesondere runder, Schmuckstein mit einem Gewicht von 1 Karat und zwei Marquise-förmige Schmucksteine mit einem Gewicht von jeweils 0,15 Karat und 0,10 Karat verwendet werden.

Vorzugsweise ragt das dekorative Element über eine Oberseite des Uhrglases hinaus. Dabei ist in vorteilhafter Weise ein Teil des dekorativen Elements in der Uhrglasausnehmung angeordnet.

Mit anderen Worten ist vorzugsweise ein erster Teil des dekorativen Elements in der Uhrglasausnehmung angeordnet, wobei ein zweiter Teil des dekorativen Elements über das erste Glas hinausragt.

Die Uhrglasausnehmung ist insbesondere in Dickenrichtung ausgebildet.

Die Uhrglasausnehmung kann vorzugsweise mittig im Uhrglas angeordnet sein. Das heißt, dass bevorzugt die erste Ausnehmung mittig im ersten Glas und die zweite Ausnehmung mittig im zweiten Glas angeordnet sind. "Mittig" bedeutet, dass eine Mittelachse/ Schwerpunktachse der Uhrglasausnehmung bzw. der jeweiligen Ausnehmung auf einer Mittelachse/ Schwerpunktachse des Uhrglases bzw. des jeweiligen Glases liegt.

Nach einer bevorzugten Ausführungsform der Erfindung weist die Uhrglasausnehmung den gleichen Querschnitt über ihre gesamte Tiefe auf. Dies bedeutet, dass die erste Ausnehmung und die zweite Ausnehmung den gleichen Querschnitt über ihre jeweilige Tiefe aufweisen. Unter dem Begriff "Querschnitt" versteht man sowohl eine Querschnittsfläche als auch eine Querschnittsform. Somit kann die Uhrglasausnehmung einfach hergestellt werden. Die Tiefe der Uhrglasausnehmung bzw. der ersten Ausnehmung und der zweiten Ausnehmung ist das Maß der entsprechenden Ausnehmung in Dickenrichtung der Gläser.

Beispielsweise kann die Uhrglasausnehmung zylinderförmig ausgebildet sein.

Andere Formen für die erste Ausnehmung und/oder die zweite Ausnehmung sind allerdings auch möglich. So kann/können beispielsweise die erste Ausnehmung und/oder die zweite Ausnehmung einen rechteckigen oder ellipsenförmigen Querschnitt ausgebildet aufweisen.

Vorzugsweise entspricht die Form der jeweiligen Ausnehmung der Form der Fassung, insbesondere der Form des ersten Fassungsbereichs und/oder des zweiten Fassungsbereichs, insbesondere wenn der erste Fassungsbereich und/oder der zweite Fassungsbereich mit dem ersten Glas und/oder dem zweiten Glas in Kontakt steht/stehen.

Nach einer alternativen vorteilhaften Ausführungsform der Erfindung ist die erste Ausnehmung vorzugsweise an der Oberseite und/oder Unterseite des ersten Glases in Umfangsrichtung zumindest teilweise, vollständig, d.h. über 360 Grad, abgeschrägt.

Alternativ oder zusätzlich dazu kann die zweite Ausnehmung vorzugsweise an der Oberseite und/oder Unterseite des zweiten Glases in Umfangsrichtung zumindest teilweise, insbesondere vollständig, d.h. über 360 Grad, abgeschrägt sein.

Insbesondere kann/können die erste Ausnehmung und/oder die zweite Ausnehmung einen konischen Bereich aufweisen. Hierbei kann/können die erste Ausnehmung und/oder die zweite Ausnehmung vorzugsweise einen zylinderförmigen Bereich aufweisen.

Besonders bevorzugt weisen beide Ausnehmungen jeweils einen konischen Bereich auf. Dabei weisen beide Ausnehmungen vorzugsweise jeweils auch einen zylinderförmigen Bereich auf. Vorteilhafterweise sind die konischen Bereiche an der Oberseite des jeweiligen Glases angeordnet. Entsprechend sind die zylinderförmigen Bereiche vorzugsweise an der Unterseite des jeweiligen Glases angeordnet. Somit ist dabei der zylinderförmige Bereich der ersten Ausnehmung in vorteilhafter Weise dem konischen Bereich der zweiten Ausnehmung zugewandt.

Im Rahmen der Erfindung ist die Oberseite des ersten Glases als die Oberseite des Uhrglases zu verstehen. Entsprechend ist die Unterseite des zweiten Glases als die Unterseite des Uhrglases zu verstehen.

Die erste Ausnehmung und/oder die zweite Ausnehmung weist/weisen jeweils vorzugsweise eine Querschnittfläche senkrecht zur Dickenrichtung auf, die mindestens 1/20, bevorzugt mindestens 1/16, besonders bevorzugt mindestens 1/10, einer Fläche der Oberseite des ersten Glases beträgt.

Bevorzugt liegt der erste Fassungsbereich am konischen Bereich der ersten Ausnehmung an, gegebenenfalls mit dazwischenliegender Verklebung, und weist an der Kontaktstelle mit dem konischen Bereich eine komplementäre, insbesondere gleiche, Form zu diesem auf.

Vorzugsweise ist der erste Fassungsbereich mit dem konischen Bereich der ersten Ausnehmung verbunden. Insbesondere ist zwischen dem ersten Fassungsbereich und dem konischen Bereich der ersten Ausnehmung eine stoffschlüssige Verbindung, besonders bevorzugt eine Verklebung, vorgesehen.

In entsprechender Weise kann der zweite Fassungsbereich vorzugsweise am zylinderförmigen Bereich der zweiten Ausnehmung anliegen, gegebenenfalls mit dazwischenliegender Verklebung, und an der Kontaktstelle mit dem zylinderförmigen Bereich eine komplementäre, insbesondere gleiche, Form zu diesem aufweisen.

Bevorzugt ist der zweite Fassungsbereich mit dem zylinderförmigen Bereich der zweiten Ausnehmung verbunden. Insbesondere ist zwischen dem zweiten Fassungsbereich und dem zylinderförmigen Bereich der ersten Ausnehmung eine stoffschlüssige Verbindung, besonders bevorzugt eine Verklebung, vorgesehen.

Ferner betrifft die vorliegende Erfindung eine Uhr, die ein zuvor beschriebenes Uhrglas umfasst. Die Uhr weist insbesondere ein Gehäuse auf, an welchem das Uhrglas angeordnet ist. Bevorzugt ist das Uhrglas im Gehäuse angebracht und mit diesem verklebt. Das Uhrglas ist am Gehäuse derart angeordnet, so dass das erste Glas einem Innenraum des Gehäuses abgewandt ist. Mit anderen Worten ist bei der Uhr das erste Glas das Außenglas. Entsprechend ist das zweite Glas das Innenglas der Uhr.

Die Uhr ist vorzugsweise eine Armbanduhr.

Zum Herstellen des zuvor beschriebenen Uhrglases wird ein Verfahren vorgeschlagen, welches die folgenden Schritte umfasst:
- Bereitstellen des ersten Glases und des zweiten Glases,
- Ausbilden der ersten Ausnehmung im ersten Glas und der zweiten Ausnehmung im zweiten Glas zum Bilden der Uhrglasausnehmung,
- Anordnen einer Fassung, vorzugsweise mit einem bereits eingesetzten dekorativen Element, in der Ausnehmung, und
- Verbinden des ersten Glases mit dem zweiten Glas über die verbindende Zwischenschicht; insbesondere nach dem Anordnen des dekorativen Elements in der Uhrglasausnehmung.

Zum Bereitstellen eines als Schmuckstein ausgebildeten dekorativen Elements kann ein Rohstein geschliffen werden, so dass der Schmuckstein die erwünschte Schliffform aufweist.

Die erste Ausnehmung und/oder die zweite Ausnehmung kann/können bevorzugt mittels Laserbohrens oder mechanischen Bohrens in das jeweilige Glas geformt werden. Alternativ kann/können die erste Ausnehmung und/oder die zweite Ausnehmung vorzugsweise in das entsprechende Glas unter Anwendung von Hitze eingepresst werden, wobei insbesondere nach dem Pressvorgang das entsprechende Glas geschliffen werden kann.

Nach dem Ausbilden der Ausnehmungen wird/werden die Oberseite und/oder Unterseite des ersten Glases und/oder des zweiten Glases vorzugsweise geschliffen. Somit können potentiell entstehende Ausbrüche an den Ausnehmungen entfernt werden.

Das Verbinden des ersten Glases mit dem zweiten Glas über die verbindende Zwischenschicht umfasst vorzugsweise das Erhitzen der Anordnung aus dem ersten Glas, dem zweiten Glas und einer dazwischen angeordneten Ausgangszwischenschicht bei einer Temperatur zwischen 110 Grad Celsius und 150 Grad Celsius, insbesondere zwischen 130 Grad Celsius bis 145 Grad Celsius.

Die Ausgangszwischenschicht kann vorzugsweise eine organische oder anorganische Verbindungs- oder Klebemasse oder Adhäsionsschicht oder eine elastische Folie (auch: Laminierfolie oder Verbundfolie, insbesondere Klebefolie) sein. Wenn eine Folie zum Verbinden der Gläser benutzt wird, weist diese eine Ausnehmung an der Stelle der Uhrglasausnehmung auf, wenn die Folie zwischen den Gläsern angeordnet wird. Der Querschnitt der Ausnehmung der Folie wird in Abhängigkeit vom Querschnitt der Uhrglasausnehmung an der Kontaktfläche zwischen dem ersten Glas und dem zweiten Glas gewählt. Insbesondere weisen die Ausnehmung der Folie die Uhrglasausnehmung an der zuvor beschriebenen Stelle die gleiche Querschnittsform auf. Ferner ist vorzugsweise eine Querschnittsfläche der Ausnehmung der Folie größer oder gleich der Querschnittsfläche der Uhrglasausnehmung an der zuvor beschriebenen Stelle.

Insbesondere kann die Ausgangszwischenschicht aus Gießharz ausgebildet sein. Das Gießharz kann z.B. ein Zweikomponenten-Epoxidharz oder ein UV-aushärtender Einkomponentenkleber oder ein vernetzendes Silikon (Einkomponenten- oder Zweikomponentenprodukt sein.

Ferner kann das Verbinden des ersten Glases mit dem zweiten Glas vorzugsweise unter Vakuum, um Luft aus dem Zwischenraum zwischen den Gläsern zu entfernen, und unter Ausübung von Druck, insbesondere von 1 bar (einschließlich) bis 8 bar (einschließlich), auf die Anordnung aus den Gläsern, um eine starke Anbindung der Gläser aneinander zu erzielen, erfolgen. Insbesondere bei einem Druck von 8 bar kann eine besonders hohe Klarheit bzw. Transparenz der verbindenden Zwischenschicht erzielt werden.

Der Schritt des Verbindens des ersten Glases mit dem zweiten Glas über die verbindende Zwischenschicht umfasst in vorteilhafter Weise auch den Schritt des Verbindens der Fassung mit dem Uhrglas. Insbesondere unter den bereits beschriebenen Temperatur- und Druckbedingungen fließt Material der Ausgangszwischenschicht aus dem Bereich zwischen dem ersten Glas und dem zweiten Glas heraus und gelangt in den (freien) Raum der Uhrglasausnehmung, der durch das erste Glas, das zweite Glas und die Fassung definiert ist. Mit anderen Worten fließt Material der Ausgangszwischenschicht aus dem Bereich zwischen dem ersten Glas und dem zweiten Glas in den Raum um die Fassung. Insbesondere wird dieser Raum mit Material der Ausgangszwischenschicht vollständig ausgefüllt.

Durch den beschriebenen Verbindungsvorgang wird eine luftdichte Verbindungsstelle zwischen dem ersten Glas und dem zweiten Glas sowie zwischen den beiden Gläsern und der Fassung erzielt. Aufgrund des Mangels an Hohlräumen oder Luftblasen zwischen der Fassung und der verbindenden Zwischenschicht tritt ein Vakuumeffekt auf, bei dem die Fassung durch den darauf ausgeübten Luftdruck in die Uhrglasausnehmung gedrückt wird. Bei einer mechanischen Belastung der Fassung, bei der die Fassung in der Uhrglasausnehmung zu wackeln anfangen könnte, saugt das Vakuum die Fassung an. Die Fassung wird also nicht nur durch die Wirkung der verbindenden Zwischenschicht gehalten, sondern auch durch den beschriebenen auftretenden Vakuumeffekt.

Die Ausgangszwischenschicht kann eine flüssige Klebemasse sein, die dann zum Verbinden der Gläser miteinander sowie der Fassung mit dem Uhrglas aushärtet.

Der Verbindungsvorgang zum Verbinden des ersten Glases mit dem zweiten Glas findet vorzugsweise in einem Autoklav oder einem Laminator statt. Im Laminator wird die Anordnung aus dem ersten Glas, dem zweiten Glas, der dazwischenliegenden Ausgangszwischenschicht und dem eingefassten dekorativen Element insbesondere in einem Vakuumsack evakuiert, wobei gleichzeitig von außen ein Druck von 1 bar, insbesondere durch die den Vakuumsack umgebende Luft, auf den Vakuumsack und somit auch auf die zuvor beschriebene Anordnung ausgeübt wird. Im Autoklav wird neben dem herrschenden Vakuum, unter dem sich die Anordnung befindet, insbesondere ein Druck von größer als 1 bar bis 8 bar (einschließlich) mittels eines Kompressors auf die Anordnung ausgeübt.

Im Rahmen der vorliegenden Erfindung kann der Verbindungsvorgang zum Verbinden des ersten Glases mit dem zweiten Glas auch als Laminiervorgang bezeichnet werden.

Insbesondere werden die Fassung und die Uhrglasausnehmung derart ausgebildet, dass im angeordneten Zustand der Fassung in der Uhrglasausnehmung die Fassung das erste Glas und/oder das zweite teilweise kontaktiert.

Vorzugsweise weist die erste Ausnehmung einen ersten Ausnehmungsbereich und einen zweiten Ausnehmungsbereich. Der erste und der zweite Ausnehmungsbereich der ersten Ausnehmung weisen in vorteilhafter Weise unterschiedliche Formen auf.

Entsprechend kann vorzugsweise die zweite Ausnehmung einen ersten Ausnehmungsbereich und einen zweiten Ausnehmungsbereich aufweisen. Der erste und der zweite Ausnehmungsbereich der zweiten Ausnehmung weisen in vorteilhafter Weise unterschiedliche Formen auf.

Vorzugsweise kann der erste Ausnehmungsbereich der ersten Ausnehmung konisch ausgebildet sein. Bevorzugt kann der zweite Ausnehmungsbereich der ersten Ausnehmung zylinderförmig ausgebildet sein.

Entsprechend kann der erste Ausnehmungsbereich der zweiten Ausnehmung vorzugsweise konisch ausgebildet sein. Bevorzugt kann der zweite Ausnehmungsbereich der zweiten Ausnehmung zylinderförmig ausgebildet sein.

Insbesondere kontaktiert der erste Fassungsbereich den ersten, insbesondere konischen, Ausnehmungsbereich der ersten Ausnehmung und der zweite Fassungsbereich den zweiten, insbesondere zylinderförmigen, Ausnehmungsbereich der zweiten Ausnehmung.

Vorzugsweise kann die Fassung mit dem ersten Glas und/oder dem zweiten Glas über ihre Kontaktflächen stoffschlüssig verbunden, insbesondere verklebt, werden.

Insbesondere wird eine derartige Verbindung zwischen dem ersten Fassungsbereich und dem ersten, insbesondere konischen, Ausnehmungsbereich der ersten Ausnehmung und/oder zwischen dem zweiten Fassungsbereich und dem zweiten, insbesondere zylinderförmigen, Ausnehmungsbereich der zweiten Ausnehmung vorgesehen.

Besonders bevorzugt wird die Fassung nur mit dem ersten Glas an deren Kontaktstelle mit dem ersten Glas stoffschlüssig verbunden, insbesondere verklebt. Insbesondere wird eine derartige Verbindung nur zwischen dem ersten Fassungsbereich und dem ersten, insbesondere konischen, Ausnehmungsbereich der ersten Ausnehmung vorgesehen.

Die beschriebene stoffschlüssige Verbindung, insbesondere Verklebung, zwischen der Fassung und dem ersten Glas an deren Kontaktflächen hat den Vorteil, dass im fertigen Uhrglas ein Kontakt der verbindenden Zwischenschicht mit der Umgebungsluft vermieden wird, wodurch Luftfeuchtigkeit die verbindende Zwischenschicht nicht erreichen kann. Somit wird die Haftungseigenschaft der verbindenden Zwischenschicht im fertigen Uhrglas gewährleistet, auch wenn die verbindende Zwischenschicht aus einem hygroskopischen Material ausgebildet ist. Ferner kann dadurch vermieden werden, dass während des Verbindens des ersten Glases mit dem zweiten Glas Material der Ausgangszwischenschicht aus der Uhrglasausnehmung austritt. Zudem birgt die beschriebene stoffschlüssige Verbindung den Vorteil, dass die Fassung während des Verbindens des ersten Glases mit dem zweiten Glas in der Uhrglasausnehmung bewegungslos bleibt. Durch die fixierte Position der Fassung während des Verbindungsvorgangs kann eine erwünschte Positionierung der Fassung und somit auch des dekorativen Elements im fertigen Uhrglas genau erzielt werden. Außerdem wird eine besonders feste Anbindung der Fassung an das Uhrglas gewährleistet.

Als Material für die zuvor beschriebene stoffschlüssige Verbindung wird in vorteilhafter Weise ein Material, insbesondere ein Klebematerial, verwendet, welches zwischen 110 Grad Celsius und 150 Grad Celsius, insbesondere zwischen 130 Grad Celsius bis 145 Grad Celsius beständig bleibt, wasserunempfindlich ist und mit dem Material der Ausgangszwischenschicht nicht reagiert.

Nach einer alternativen Ausgestaltung der Erfindung kann statt einer Verklebung an der Kontaktstelle zwischen dem ersten Glas und der Fassung, insbesondere zwischen dem ersten Glas bzw. dem ersten Ausnehmungsbereich der ersten Ausnehmung und dem ersten Fassungsbereich vorzugsweise ein Dichtelement vorgesehen sein.

Entsprechend kann nach einer alternativen Ausgestaltung der Erfindung statt einer Verklebung an der Kontaktstelle zwischen dem zweiten Glas und der Fassung, insbesondere zwischen dem zweiten Glas bzw. dem ersten Ausnehmungsbereich der ersten Ausnehmung und dem zweiten Fassungsbereich vorzugsweise ein Dichtelement vorgesehen sein.

Beispielsweise kann ein Zweikomponenten-Epoxidharz oder ein wasserfester UV-Kleber verwendet werden.

Zum Bereitstellen des fertigen Uhrglases wird Material der Ausgangszwischenschicht, welches potentiell aus dem Zwischenraum zwischen den Gläsern herausgeflossen ist, entfernt.

Das fertige Uhrglas kann dann in das Gehäuse der Uhr eingebracht, insbesondere mit diesem umfangsseitig verklebt, werden.

Weitere Einzelheiten, Vorteile und Merkmale der vorliegenden Erfindung ergeben sich aus nachfolgender Beschreibung von Ausführungsbeispielen anhand der Zeichnung. Wobei gleiche bzw. funktional gleiche Bauteile jeweils mit dem gleichen Bezugszeichen versehen sind. Es zeigt:
- Fig. 1: eine schematische Draufsicht einer erfindungsgemäßen Uhr, welche ein Uhrglas gemäß einem ersten Ausführungsbeispiel der vorliegenden Erfindung umfasst,
- Fig. 2: eine schematische Schnittansicht des Uhrglases gemäß dem in Fig. 1 gekennzeichneten Schnitt A-A,
- Fig. 3: eine schematische Schnittansicht eines ersten Glases des Uhrglases aus Fig. 2,
- Fig. 4: eine Draufsicht des ersten Glases aus Fig. 3,
- Fig. 5: eine schematische Schnittansicht eines zweiten Glases des Uhrglases aus Fig. 2,
- Fig. 6: eine Draufsicht des zweiten Glases aus Fig. 5, und
- Fig. 7: eine schematische Schnittansicht eines Uhrglases gemäß einem zweiten Ausführungsbespiel der vorliegenden Erfindung.

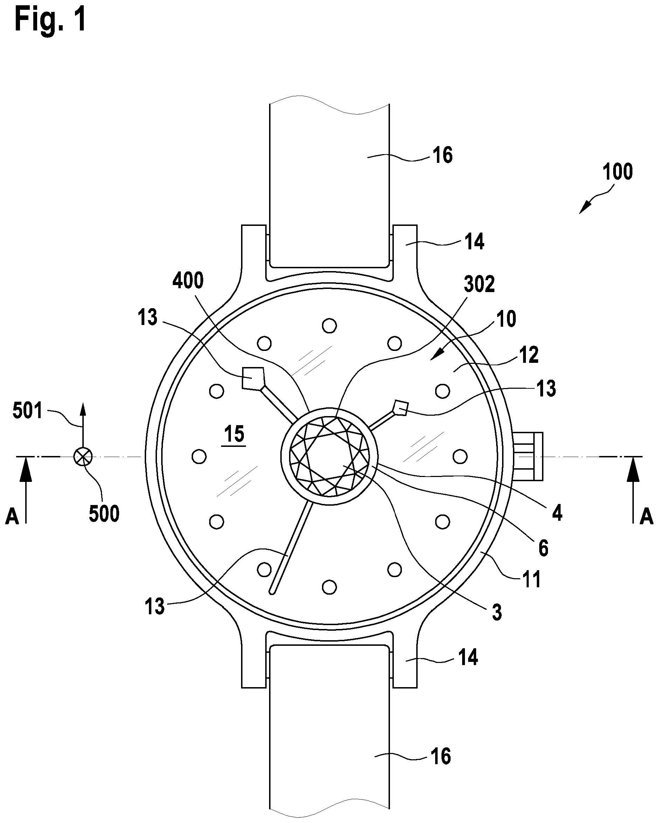

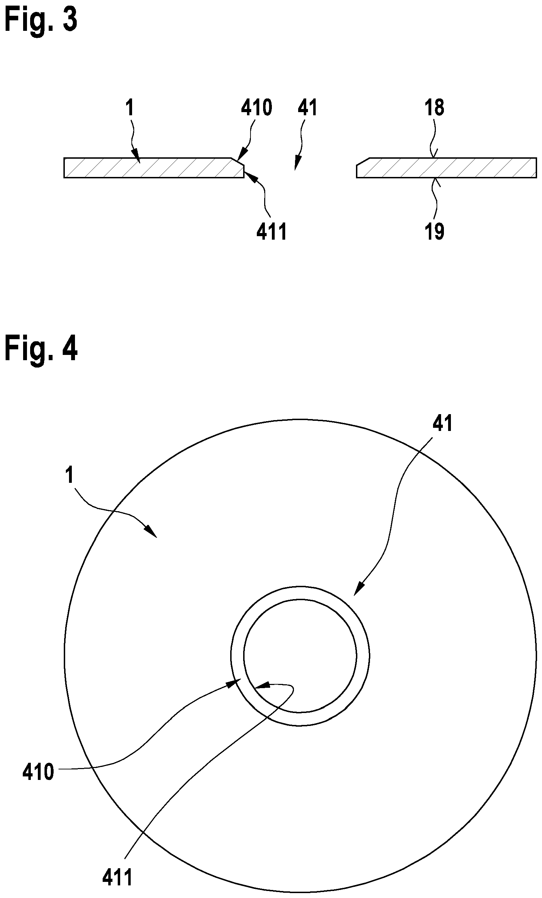

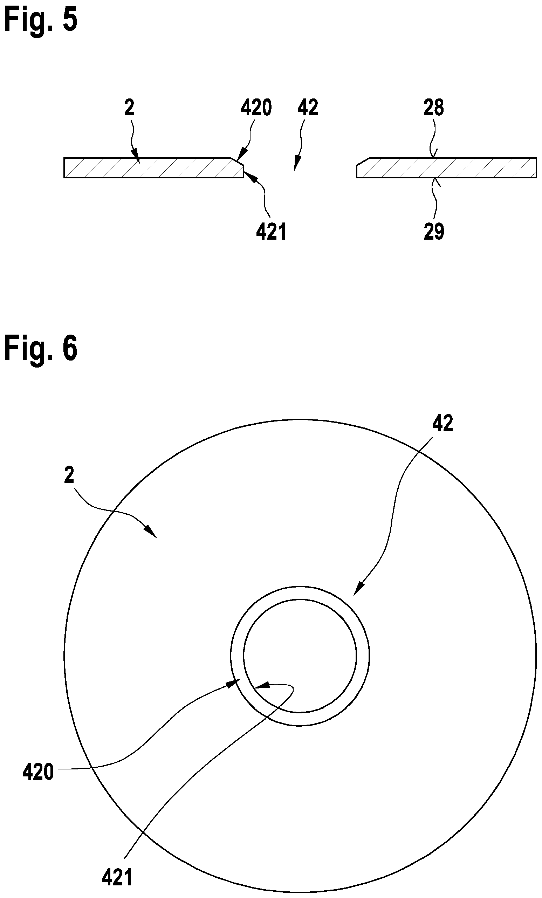

Nachfolgend wird unter Bezugnahme auf die Figuren 1 bis 6 eine Uhr 100 mit einem Uhrglas 10 gemäß einem ersten Ausführungsbeispiel der vorliegenden Erfindung sowie ein Herstellungsverfahren des Uhrglases 10 bzw. der Uhr 100 im Detail beschrieben.

Wie aus Figur 1 ersichtlich ist, weist die Uhr 100 ein Gehäuse 11 auf, in welchem das Uhrglas 10 angeordnet ist. Insbesondere ist das Uhrglas 10 über seinen Umfang mit dem Gehäuse 11 verklebt. Das Gehäuse 11 sowie das Uhrglas 10 sind kreisförmig ausgebildet, können allerdings jede andere Form wie z.B. eines Rechtecks, eines Polygons usw. aufweisen.

Die Uhr 100, die insbesondere eine Armbanduhr ist, weist weiterhin ein Zifferblatt 12, welches beispielsweise als Goldblatt ausgebildet ist, drei Zeiger 13 zum Anzeigen der Stunden, Minuten und Sekunden und zwei Anschlüsse zum Anschließen des Gehäuses 11 an ein Armband 16 auf. Das Zifferblatt 12 und die Zeiger 13 sind in einem Innenraum 15 des Gehäuses angeordnet.

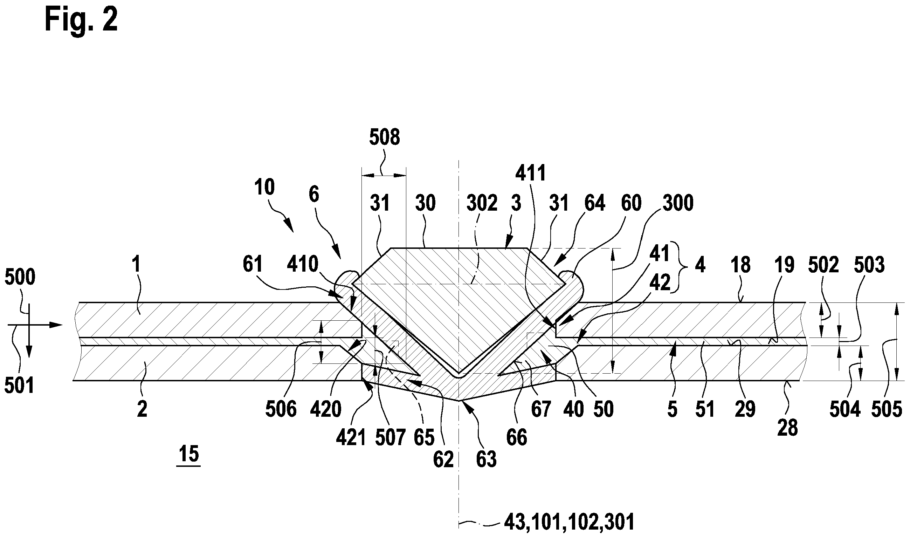

Aus Figuren 1 und 2 ergibt sich ferner, dass beim Uhrglas 10 ein dekoratives Element 3 vorgesehen ist. Insbesondere ist das dekorative Element 3 ein Diamant, der in der Mitte des Uhrglases 10 angeordnet ist. Das heißt, dass die Mittelachse 301 des dekorativen Elements 3 mit der Mittelachse 101 des Uhrglases 10 übereinstimmt. Eine andere Anordnung des dekorativen Elements 3, insbesondere eine nicht zentrierte Anordnung des dekorativen Elements 3 mit Bezug auf das Uhrglas 10, ist allerdings auch möglich.

Vorzugsweise weist das dekorative Element 3 ein Gewicht von mindestens 2 Karat, bevorzugt von mindestens 3 Karat, bevorzugt von mindestens 4 Karat, besonders bevorzugt mindestens 5 Karat, auf. Aufgrund seiner Größe prägt das dekorative Element 3 das Erscheinungsbild des Uhrglases 10 und somit auch der Uhr 100. Zum Anordnen des dekorativen Elements 3 am Uhrglas 10 ist eine Fassung 6 vorgesehen, in der das dekorative Element 3 aufgenommen ist. Die Fassung 6 ist insbesondere eine Metallfassung, wie beispielsweise eine Goldfassung, Platinfassung, Silberfassung oder Edelstahlfassung.

Aus Figur 2 ist ersichtlich, dass das Uhrglas 10 ein erstes Glas 1 und ein zweites Glas 2 umfasst, welche insbesondere als ebene Glasscheiben ausgebildet sind. Es ist aber auch möglich, die Gläser 1, 2 gekrümmt mit gleicher Krümmung an ihren Kontaktflächen auszubilden.

Das erste Glas 1 und das zweite Glas 2 liegen aufeinander und sind über eine verbindende Zwischenschicht 5 flächig miteinander verbunden. Durch die stoffschlüssige Verbindung mittels der Zwischenschicht 5 entsteht eine luft- und wasserdichte Verbindungsstelle zwischen den Gläsern 1, 2.

Insbesondere ist die verbindende Zwischenschicht 5 aus einer transparenten Laminierfolie ausgebildet. Beispielsweise kann die verbindende Zwischenschicht 5 aus einer EVA-Laminierfolie oder einer PVB-Laminierfolie ausgebildet sein.

Das erste Glas 1 ist einem Innenraum 15 des Gehäuses 11 abgewandt bzw. das zweite Glas 2 ist dem Innenraum 15 des Gehäuses 12 zugewandt. Somit ist das erste Glas 1 das Glas, auf das das Licht zuerst trifft. Im Rahmen der Erfindung kann das erste Glas 1 auch als oberes Glas oder Außenglas und das zweite Glas auch als unteres Glas oder Innenglas bezeichnet werden.

In vorteilhafter Weise ist das erste Glas 1 aus Saphirglas ausgebildet, welches eine hohe Kratzfestigkeit aufweist. Das zweite Glas 2 ist aus Mineralglas ausgestaltet. Andere Materialien, wie z.B. andere Glasarten oder Kunststoff, sind allerdings auch möglich sowohl für das erste Glas 1 als auch das zweite Glas 2.

Im ersten Glas 1 ist eine erste Ausnehmung 41 und im zweiten Glas 2 eine zweite Ausnehmung 42 gebildet. Die erste Ausnehmung 41 und die zweite Ausnehmung 42, die beide durchgehend ausgebildet sind, definieren eine Uhrglasausnehmung 4 im Uhrglas 10. Eine Mittelachse 43 der Uhrglasausnehmung 4 liegt auf der Mittelachse 101 des Uhrglases 10.

In die Uhrglasausnehmung 4 bzw. in die erste Ausnehmung 41 und die zweite Ausnehmung 42 ist die Fassung 6 eingesetzt.

Durch das erste Glas 1, das zweite Glas 2 und die Fassung 6 ist ein Raum 40 der Uhrglasausnehmung 4 begrenzt. Der Raum 40 ist mit Verbindungsmaterial 50 der verbindenden Zwischenschicht 5 vollständig gefüllt, so dass die Fassung 6 über das Verbindungsmaterial 50 mit dem ersten Glas 1 und dem zweiten Glas 2 verbunden ist.

Dabei umfasst die verbindende Zwischenschicht 5 sowohl Verbindungsmaterial 51, welches sich zwischen den gegenüberliegenden Flächen 19, 29 der Gläser 1, 2 befindet, als auch das Verbindungsmaterial 50, welches sich im Raum 40 der Uhrglasausnehmung 4 befindet. Mit anderen Worten bildet das Verbindungsmaterial 50 im Raum 40 zusammen mit dem Verbindungsmaterial 51 zwischen den gegenüberliegenden Flächen 19, 29 der Gläser 1, 2 die verbindende Zwischenschicht 5, die kontinuierlich ausgebildet ist.

Somit dient die verbindende Zwischenschicht 5 dazu, das erste Glas 1 mit dem zweiten Glas 2 sowie die Fassung 6 mit beiden Gläsern 1, 2 zu verbinden.

Die Fassung 6, die rotationssymmetrisch ausgebildet ist, umgibt das dekorative Element 3 teilweise, so dass ein oberer Teil des dekorativen Elements 3 durch kein weiteres Bauteil verdeckt ist bzw. in direktem Kontakt mit Luft steht. Hierbei stehen eine Tafel 30 und teilweise die Oberteilfacetten 31 des als Diamant ausgebildeten dekorativen Elements 3 in direktem Kontakt mit Luft. Somit kann Licht direkt auf das dekorative Element 3 treffen.

Zum Fixieren des dekorativen Elements 3 in der Fassung 6 weist die Fassung 6 eine Bördelung 60 auf. Es ist allerdings auch möglich, dass das dekorative Element 3 in der Fassung 6 geklebt ist oder mit dieser auf anderer Weise verbunden ist.

Vorzugsweise weist die Fassung 6 einen ersten Fassungsbereich 61 und einen zweiten Fassungsbereich 62 auf. Dabei ist der Raum 40 der Uhrglasausnehmung 4 durch das erste Glas 1, das zweite Glas 2, den ersten Fassungsbereich 61 und den zweiten Fassungsbereich 62 definiert.

Insbesondere ist der erste Fassungsbereich 61 im Vergleich zum zweiten Fassungsbereich 62 dem Innenraum 15 des Gehäuses 11 und dem Zifferblatt 12 der Uhr 100 abgewandt. Entsprechend ist der zweite Fassungsbereich 62 im Vergleich zum ersten Fassungsbereich 61 dem Innenraum 15 und dem Zifferblatt 12 zugewandt.

Der erste Fassungsbereich 61 und der zweite Fassungsbereich 62 sind jeweils zu einer zu den Gläsern 1, 2 senkrechten Achse 102 geneigt. Die zu den Gläsern 1, 2 senkrechte Achse 102 stimmt in diesem Ausführungsbeispiel mit der Mittelachse 101 des Uhrglases 10 überein und ist parallel zur Dickenrichtung 500 der Gläser 1, 2.

Der zweite Fassungsbereich 62 weist eine größere Neigung als der erste Fassungsbereich 61 auf. Mit anderen Worten ist der zweite Fassungsbereich 62 stärker geneigt zu der zu den Gläsern 1, 2 senkrechten Achse 102 als der erste Fassungsbereich 61.

Insbesondere sind der erste Fassungsbereich 61 und der zweite Fassungsbereich 62 konisch ausgebildet, wobei die Fassungsbereiche 61, 62 einen gemeinsamen Endbereich 63 aufweisen. Andere Formen für den ersten Fassungsbereich 61 und/oder den zweiten Fassungsbereich 62 sind jedoch auch möglich.

Die Fassung 6 bzw. der erste Fassungsbereich 61 weist ferner eine Öffnung 64, durch die das dekorative Element 3 in die Fassung 6 eingesetzt wird.

Der erste Fassungsbereich 61 und der zweite Fassungsbereich 62 definieren einen Zwischenraum 67, der im montierten Zustand der Fassung 6 mit dem Verbindungsmaterial 50 der verbindenden Zwischenschicht 5 gefüllt ist.

Aus Figur 2 ist ersichtlich, dass eine maximale Dicke 507 der verbindenden Zwischenschicht 5 zwischen dem ersten Glas 1 und dem zweiten Glas 2 in der Dickenrichtung 500 der Gläser 1, 2 kleiner als eine maximale Dicke 506 des Verbindungsmaterials 50 der verbindenden Zwischenschicht 5 im Raum 40 zwischen dem ersten Glas 1, dem zweiten Glas 2 und der Fassung 6 in der Dickenrichtung der Gläser 1, 2 ist.

Weiterhin ist eine maximale Dicke 507 der verbindenden Zwischenschicht 5 zwischen dem ersten Glas 1 und dem zweiten Glas 2 in der Dickenrichtung 500 der Gläser 1, 2 kleiner als eine maximale Dicke 508 des Verbindungsmaterials 50 der verbindenden Zwischenschicht 5 im Raum 40 zwischen dem ersten Glas 1, dem zweiten Glas 2 und der Fassung 6 in einer zur Dickenrichtung 500 der Gläser 1, 2 senkrechten Richtung 501.

Beispielsweise kann die maximale Dicke 507 bis 0,4 mm, vorzugsweise bis 0,5 mm, betragen. Die maximale Dicke 508 kann zum Beispiel 2 mm betragen.

Ferner weist das Verbindungsmaterial 50 der verbindenden Zwischenschicht 5 im Raum 40 auf einer Schnittebene senkrecht zu der Oberseite 18 des Uhrglases 10 einen dreieckförmigen Querschnitt auf. Dabei ist die Schnittebene durch die Dickenrichtung 500 der Gläser 1, 2 und eine zur Dickenrichtung 500 senkrechten Richtung 501 definiert.

In diesem Ausführungsbeispiel ragt der zweite Fassungsbereich 62 über die Unterseite 28 des zweiten Glases 2, insbesondere maximal um 20%, bevorzugt maximal um 10%, besonders bevorzugt maximal um 5 %, einer Dicke 505 des Uhrglases 10, hinaus.

Die Dicke 505 des Uhrglases 10 entspricht der Summe aus der Dicke 502 des ersten Glases 1, der Dicke 503 des zweiten Glases 2 und der Dicke 504 der verbindenden Zwischenschicht 5 im Bereich zwischen dem ersten Glas 1 und dem zweiten Glas 2 (gemessen an derselben Stelle).

Jedoch ist es auch möglich, dass der zweite Fassungsbereich 62 in der Uhrglasausnehmung 4 endet. Insbesondere kann dabei der zweite Fassungsbereich 62 bündig mit der Unterseite 28 des zweiten Glases 2 sein.

Wie den Figuren 2, 3 und 4 zu entnehmen ist, weist die erste Ausnehmung 41 einen konischen Ausnehmungsbereich 410 (erster Ausnehmungsbereich der ersten Ausnehmung 41) und einen zylinderförmigen Ausnehmungsbereich 411 (zweiter Ausnehmungsbereich der ersten Ausnehmung 41) auf. Entsprechend weist gemäß den Figuren 2, 5 und 6 die zweite Ausnehmung 42 einen konischen Ausnehmungsbereich 420 (erster Ausnehmungsbereich der zweiten Ausnehmung 42) und einen zylinderförmigen Ausnehmungsbereich 421 (zweiter Ausnehmungsbereich der zweiten Ausnehmung 42) auf. Andere Formen für die erste Ausnehmung 41 und/oder die zweite Ausnehmung 42, insbesondere für die Ausnehmungsbereiche 410, 411, 420, 422, sind allerdings auch möglich.

Der konische Ausnehmungsbereich 410 der ersten Ausnehmung 41 ist an der Oberseite 18 des ersten Glases 1 angeordnet, wobei der konische Ausnehmungsbereich 420 der zweiten Ausnehmung 42 an der Oberseite 29 des zweiten Glases 2 angeordnet ist. Entsprechend ist der zylinderförmige Ausnehmungsbereich 411 an der Unterseite 19 des ersten Glases 1 angeordnet, wobei der zylinderförmige Ausnehmungsbereich 421 an der Unterseite 29 des zweiten Glases 2 angeordnet ist.

Insbesondere erstreckt sich der konische Ausnehmungsbereich 410 der ersten Ausnehmung 41 über die obere Hälfte der Tiefe der ersten Ausnehmung 1, wobei sich der zylinderförmige Ausnehmungsbereich 411 der ersten Ausnehmung 41 über die untere Hälfte der Tiefe der ersten Ausnehmung 41 erstreckt. Entsprechendes gilt auch bezüglich des konischen Ausnehmungsbereichs 420 und des zylinderförmigen Ausnehmungsbereichs 421 der zweiten Ausnehmung 42.

Zum Ausbilden der konischen Ausnehmungsbereiche 410, 420 werden die erste Ausnehmung 41 und die zweite Ausnehmung 42 an den Oberseiten 18, 28 der Gläser 1, 2 in Umfangsrichtung vollständig, d.h. über 360 Grad, abgeschrägt.

Wie aus Figur 2 ersichtlich ist, liegt der erste Fassungsbereich 61 am konischen Ausnehmungsbereich 410 der ersten Ausnehmung 41 an und weist an deren Kontaktstelle eine gleiche Form wie der konische Ausnehmungsbereich 410 auf. Insbesondere ist der erste Fassungsbereich 61 mit dem konischen Ausnehmungsbereich 410 der ersten Ausnehmung 41 verklebt.

In entsprechender Weise kontaktiert der zweite Fassungsbereich 62 den zylinderförmigen Ausnehmungsbereich 421 der zweiten Ausnehmung 42 und weist an deren Kontaktstelle eine gleiche Form wie der zylinderförmige Ausnehmungsbereich 421 auf. Insbesondere ist der zweite Fassungsbereich 62 mit dem zylinderförmigen Ausnehmungsbereich 421 der zweiten Ausnehmung 42 verklebt.

Somit ist der Raum 40 der Uhrglasausnehmung 4 insbesondere durch den zylinderförmigen Ausnehmungsbereich 411 der ersten Ausnehmung 41, den ersten Fassungsbereich 61, den zweiten Fassungsbereich 62 und den zylinderförmigen Ausnehmungsbereich 421 der zweiten Ausnehmung 42 definiert.

Das dekorative Element 3 ragt über eine Oberseite 18 des Uhrglases 10 hinaus und ist teilweise in der Uhrglasausnehmung 4 angeordnet. Insbesondere weist das dekorative Element 3 ein Maß 300 parallel zur Dickenrichtung 500 der Gläser 1, 2 auf, welches über 100% der Dicke 505 des Uhrglases 10 beträgt. Das dekorative Element 3 kann allerdings ein Maß 300 parallel zur Dickenrichtung 500 der Gläser 1, 2 aufweisen, welches kleiner als die Dicke 505 des Uhrglases 10 ist. Dabei kann das dekorative Element 3 derart angeordnet sein, dass dieses immer noch über die Oberseite 18 des Uhrglases 10 hinausragt.

Wie aus Figuren 1 und 2 ersichtlich ist, weist das dekorative Element 3 ferner eine maximale Querschnittfläche 302 in der zur Dickenrichtung 500 senkrechten Richtung 501 auf. Die maximale Querschnittfläche 302 kann mindestens 1/20, bevorzugt mindestens 1/16, besonders bevorzugt mindestens 1/10, der Fläche der Oberseite 18 des ersten Glases 1 sein.

Entsprechend weist die Uhrglasausnehmung 4, insbesondere die erste Ausnehmung 41, eine Querschnittsfläche 400, insbesondere an der Oberseite 18 des ersten Glases 1 in einer zur Dickenrichtung 500 senkrechten Richtung 501 auf, die mindestens 1/20, bevorzugt mindestens 1/16, besonders bevorzugt mindestens 1/10, der Fläche der Oberseite 18 des ersten Glases 1 ist.

Gemäß Figur 2 kann optional eine Aussparung 65 (gestrichelt gezeichnet) in einer Mantelfläche 66 der Fassung 6 ausgebildet sein. Insbesondere kann die Aussparung 65 eine vollständig umlaufende Nut sein. Bei dieser Ausgestaltung der Fassung 6 ist in vorteilhafter Weise die Nut mit Verbindungsmaterial der verbindenden Zwischenschicht 5 gefüllt und mit dem Verbindungsmaterial 50 im Raum 40 zwischen dem ersten Glas 1, dem zweiten Glas 2 und der Fassung 6 verbunden. Durch die Aussparung 65 steht eine zusätzliche Kontaktfläche zwischen der Fassung 6 und der verbindenden Zwischenschicht 5 zur Verfügung, so dass eine noch festere Anbindung der Fassung 6 am Uhrglas 10 erreicht werden kann.

Zum Herstellen des zuvor beschriebenen Uhrglases 1 werden zunächst das erste Glas 1 und das zweite Glas 2, das dekorative Element 3 und die Fassung 6 bereitgestellt.

Die erste Ausnehmung 41 und die zweite Ausnehmung 42 können bevorzugt mittels Laserbohrens oder mechanischen Bohrens oder Wasserstrahlschneidens oder Ultraschallbohrens oder Einpressens in das jeweilige Glas 1, 2 geformt werden.

Nach dem Ausbilden der Ausnehmungen 41, 42 werden die Oberseiten 18, 29 und die Unterseiten 19, 28 der Gläser 1, 2 geschliffen. Somit können potentiell entstehende Ausbrüche an den Ausnehmungen 41, 42 entfernt werden.

Zum Bereitstellen des als Diamant ausgebildeten dekorativen Elements 3 wird ein Rohdiamant geschliffen, so dass der Diamant die erwünschte Schliffform aufweist.

Das dekorative Element 3 wird dann in die Fassung eingefasst.

Auf das zweite Glas 2 wird eine Ausgangszwischenschicht gelegt, die als Laminierfolie ausgebildet ist. Die Laminierfolie ist mit einer Ausnehmung versehen, die in der Laminierfolie derart ausgebildet ist, dass diese im angeordneten Zustand der Laminierfolie auf dem zweiten Glas 2 an der Stelle der zweiten Ausnehmung 42 positioniert ist.

Danach wird das erste Glas 1 auf das zweite Glas 2 bzw. die Laminierfolie gelegt und die Fassung 6 mit dem dekorativen Element 3 in die Ausnehmung eingesetzt, die durch die erste Ausnehmung 41, die Ausnehmung der Laminierfolie und die zweite Ausnehmung 42 gebildet ist.

Zunächst wird der erste Fassungsbereich 61 mit dem konischen Ausnehmungsbereich 410 der ersten Ausnehmung 41 verklebt.

Zum Schluss wird das erste Glas 1 und das zweite Glas 2 miteinander verbunden.

Es ist allerdings möglich, dass das Verbinden des ersten Glases 1 mit dem zweiten Glas 2 vor der Verklebung des ersten Fassungsbereichs 61 mit dem konischen Ausnehmungsbereich 410 der ersten Ausnehmung 41 erfolgen kann.

Zum Verbinden des ersten Glases 1 mit dem zweiten Glas 2 wird zunächst Luft aus dem Zwischenraum zwischen den Gläsern 1, 2 entfernt, so dass ein Vakuum im Zwischenraum zwischen den Gläsern 1, 2 herrscht.

Die Anordnung aus dem ersten Glas 1, dem zweiten Glas 2 und der dazwischen angeordneten Laminierfolie wird bei einer Temperatur zwischen 110 Grad Celsius und 150 Grad Celsius, insbesondere zwischen 130 Grad Celsius bis 145 Grad Celsius, erhitzt. Ferner wird Druck auf die Anordnung aus den Gläsern 1, 2 ausgeübt.

Durch das Erhitzen wird die Laminierfolie teigig bzw. flüssig. Somit und aufgrund des ausgeübten Drucks auf die Anordnung aus dem ersten Glas 1 und dem zweiten Glas 2 fließt das Material der Laminierfolie in den Raum 40, der durch das erste Glas 1, das zweite Glas 2, den ersten Fassungsbereich 61 und den zweiten Fassungsbereich 62 definiert ist, und füllt diesen vollständig aus.

Wenn die Fassung 6 die zuvor beschriebene Nut 65 aufweist, fließt das Material der Laminierfolie auch in die Nut 65.

Nachdem das Material der Laminierfolie gekühlt worden ist, ist eine feste Verbindung des ersten Glases 1 mit dem zweiten Glas 2 sowie der Fassung 6 mit den Gläsern 1, 2 erzielt. Dabei ist die als Laminierfolie ausgebildete Ausgangszwischenschicht zur verbindenden Zwischenschicht 5 im fertigen Uhrglas 10 geworden.

Wenn durch den Verbindungsvorgang Material der Laminierfolie aus dem Zwischenraum zwischen dem ersten Glas 1 und dem zweiten Glas 2 herausgeflossen ist, wird dieses Material zum Herstellen des fertigen Uhrglases 10 entfernt.

Das fertige Uhrglas 10 wird dann in das Gehäuse 11 der Uhr 100 eingebracht und mit diesem über seinen Umfang verklebt.

Durch das beschriebene Verfahren wird die Fassung 6 mit Verbindungsmaterial der verbindenden Zwischenschicht 5 umgeben, so dass ein "Anker" bereitgestellt wird, der die Fassung 6 stabil am ersten Glas 1 und am zweiten Glas 2 hält und eine Anschlagenergie bei einem potentiellen Anschlagen der Fassung 6 auf beide Gläser 1, 2 weiterleitet. Somit kann verhindert werden, dass sich die Fassung 6 vom Uhrglas 10 löst und somit aus der Uhrglasausnehmung 4 herausfällt. Dieser "Anker", der durch das Verbindungsmaterial 50 im Raum 40 zwischen dem ersten Glas 1, dem zweiten Glas 2 und der Fassung 6 gebildet ist, kann die Fassung 6 in der Uhrglasausnehmung 6 festhalten, auch wenn dieser vom Verbindungsmaterial 51 der verbindenden Zwischenschicht 5 zwischen dem ersten Glas 1 und dem zweiten Glas 2 abreißen sollte.

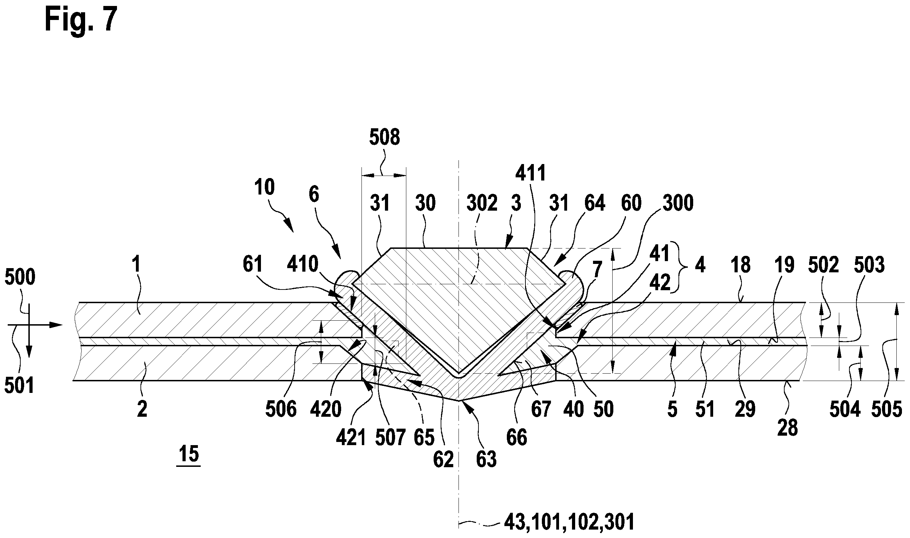

In Figur 7 ist ein Uhrglas 10 gemäß einem zweiten Ausführungsbeispiel der vorliegenden Erfindung dargestellt.

Der Aufbau des Uhrglases 10 gemäß dem zweiten Ausführungsbeispiel entspricht grundsätzlich demjenigen vom Uhrglas 10 gemäß dem ersten Ausführungsbeispiel.

Allerdings weist das Uhrglas 10 gemäß dem zweiten Ausführungsbeispiel im Gegensatz zum Uhrglas 10 gemäß dem ersten Ausführungsbeispiel anstelle einer Verklebung zwischen dem ersten Fassungsbereich 61 und dem konischen Ausnehmungsbereich 410 der ersten Ausnehmung 41 ein ringförmiges Dichtelement 7 auf.

In diesem Fall erfolgt der Schritt des Anbringens des Dichtelements 7 am ersten Glas 1 vorzugsweise vor dem Verbinden des ersten Glases 1 mit dem zweiten Glas 2. Durch den Verbindungsvorgang zwischen den Gläsern 1, 2 wird das Dichtelement 7 in vorteilhafter Weise durch die Fassung 6 gedrückt.

Somit wird eine wasser- und luftdichte Anordnung der Fassung 6 am ersten Glas 1 erzielt. Dadurch kann vermieden werden, dass die verbindende Zwischenschicht 5 in Kontakt mit Wasser oder der Luftfeuchtigkeit kommt.

Neben der vorstehenden schriftlichen Beschreibung der Erfindung wird zu deren ergänzender Offenbarung hiermit explizit auf die zeichnerische Darstellung der Erfindung in den Fig. 1 bis 7 Bezug genommen.

### Bezugszeichenliste

- 1: erstes Glas
- 2: zweites Glas
- 3: dekoratives Element
- 4: Uhrglasausnehmung
- 5: verbindende Zwischenschicht
- 6: Fassung
- 7: Dichtelement
- 10: Uhrglas
- 11: Gehäuse
- 12: Zifferblatt
- 13: Zeiger
- 14: Anschluss für ein Armband
- 15: Innenraum
- 16: Armband
- 18: Oberseite
- 19: Fläche
- 28: Unterseite
- 29: Fläche
- 30: Tafel
- 31: Oberteilfacette
- 40: Raum
- 41: erste Ausnehmung
- 42: zweite Ausnehmung
- 43: Mittelachse
- 50: Zwischenraum
- 60: Bördelung
- 61: erster Fassungsbereich
- 62: zweiter Fassungsbereich
- 63: Endbereich
- 64: Öffnung
- 65: Aussparung
- 66: Mantelfläche
- 67: Zwischenraum
- 100: Uhr
- 101: Mittelachse
- 102: Achse
- 300: Maß
- 301: Mittelachse
- 302: Querschnittfläche
- 400: Querschnittsfläche
- 410: konischer Ausnehmungsbereich
- 411: zylinderförmiger Ausnehmungsbereich
- 420: konischer Ausnehmungsbereich
- 421: zylinderförmiger Ausnehmungsbereich
- 500: Dickenrichtung
- 501: zur Dickenrichtung senkrechte Richtung
- 502: Dicke
- 503: Dicke
- 504: Dicke
- 505: Dicke
- 506: Dicke
- 507: Dicke
- 508: Dicke

## Patentansprüche

1. Uhrglas (10), umfassend:
• ein erstes Glas (1),
• ein zweites Glas (2), welches mit dem ersten Glas (1) über eine verbindende Zwischenschicht (5) verbunden ist,
• ein dekoratives Element (3), welches in eine Fassung (6) eingesetzt ist, und
• eine Uhrglasausnehmung (4), die durch eine erste Ausnehmung (41) im ersten Glas (1) und eine zweite Ausnehmung (42) im zweiten Glas (2) gebildet ist,
• wobei die Fassung (6) in der Uhrglasausnehmung (4) angeordnet ist,
• wobei ein Raum (40) der Uhrglasausnehmung (4), der durch das erste Glas (1), das zweite Glas (2) und die Fassung (6) definiert ist, mit Verbindungsmaterial (50) der verbindenden Zwischenschicht (5) gefüllt ist, so dass die Fassung (6) über das Verbindungsmaterial (50) mit dem ersten Glas (1) und dem zweiten Glas (2) verbunden ist,
wobei die Fassung (6) einen ersten Fassungsbereich (61) und einen zweiten Fassungsbereich (62) aufweist, wobei der erste Fassungsbereich (6) und/oder der zweite Fassungsbereich (61) zu einer zu den Gläsern (1, 2) senkrechten Achse (102) geneigt ist/sind.

2. Uhrglas (10) nach Anspruch 1, wobei die Fassung (6) mindestens eine Aussparung (65) aufweist, die in einer Mantelfläche (66) der Fassung (6) ausgebildet ist.

3. Uhrglas (10) nach Anspruch 1 oder 2, wobei der zweite Fassungsbereich (62) eine größere Neigung als der erste Fassungsbereich (61) aufweist.

4. Uhrglas (10) nach einem der Ansprüche 1 bis 3, dass der zweite Fassungsbereich (62) über eine Unterseite (28) des zweiten Glases (2), insbesondere maximal um 20%, bevorzugt maximal um 10%, besonders bevorzugt maximal um 5 %, einer Dicke (505) des Uhrglases (10), hinausragt.

5. Uhrglas (10) nach einem der vorherigen Ansprüche, wobei die erste Ausnehmung (41) und insbesondere auch die zweite Ausnehmung (42) durchgängig ausgebildet sind.

6. Uhrglas (10) nach einem der vorherigen Ansprüche, wobei das dekorative Element (3) ein Maß (300), welches mindestens 50%, bevorzugt mindestens 80%, besonders bevorzugt über 100%, einer Dicke (505) des Uhrglases (10), parallel zu einer zu den Gläsern (1, 2) senkrechten Achse aufweist.

7. Uhrglas (10) nach einem der vorherigen Ansprüche, wobei das dekorative Element (3) über eine Oberseite (18) des Uhrglases (10) hinausragt.

8. Uhrglas (10) nach einem der vorherigen Ansprüche, wobei die erste Ausnehmung (41) und/oder die zweite Ausnehmung (42) jeweils einen konischen Ausnehmungsbereich (410, 420) und einen zylinderförmigen Ausnehmungsbereich (411, 421) aufweist/aufweisen.

9. Uhrglas (10) nach Anspruch 8, wobei der erste Fassungsbereich (61) am konischen Ausnehmungsbereich (410) der ersten Ausnehmung (41) anliegt, gegebenenfalls mit dazwischenliegender Verklebung oder dazwischenliegendem Dichtelement, und insbesondere an der Kontaktstelle mit dem konischen Ausnehmungsbereich (410) eine komplementäre Form zu diesem aufweist und/oder wobei der zweite Fassungsbereich (62) am zylinderförmigen Ausnehmungsbereich (421) der zweiten Ausnehmung (42) anliegt, gegebenenfalls mit dazwischenliegender Verklebung oder dazwischenliegendem Dichtelement, und insbesondere an der Kontaktstelle mit dem zylinderförmigen Ausnehmungsbereich (421) eine komplementäre Form zu diesem aufweist.

10. Uhr (100), umfassend ein Uhrglas (10) nach einem der vorherigen Ansprüche.

## Claims

1. A watch glass (10) comprising:
• a first glass (1),
• a second glass (2) connected to the first glass (1) via a connecting intermediate layer (5),
• a decorative member (3) inserted into a frame (6), and
• a watch glass recess (4) formed by a first recess (41) in the first glass (1) and a second recess (42) in the second glass (2),
• wherein the frame (6) is disposed in the watch glass recess (4),
• wherein a space (40) of the watch glass recess (4) defined by the first glass (1), the second glass (2), and the frame (6) is filled with connecting material (50) of the connecting intermediate layer (5) so that the frame (6) is connected to the first glass (1) and the second glass (2) via the connecting material (50),
wherein the frame (6) comprises a first frame portion (61) and a second frame portion (62), wherein at least one of the first frame portion (6) and the second frame portion (61) is inclined to an axis (102) perpendicular to the glasses (1, 2).

2. The watch glass (10) according to claim 1, wherein the frame (6) comprises at least one recess (65) formed in a lateral surface (66) of the frame (6).

3. The watch glass (10) according to claim 1 or 2, wherein the second frame portion (62) has a greater inclination than the first frame portion (61).

4. The watch glass (10) according to any one of claims 1 to 3, wherein the second frame portion (62) protrudes beyond an underside (28) of the second glass (2), in particular by at most 20%, preferably by at most 10%, particularly preferably by at most 5%, of a thickness (505) of the watch glass (10).

5. The watch glass (10) according to any one of the preceding claims, wherein the first recess (41) and in particular also the second recess (42) are formed continuously.

6. The watch glass (10) according to any one of the preceding claims, wherein the decorative member (3) has a dimension (300) which is at least 50%, preferably at least 80%, particularly preferably over 100%, of a thickness (505) of the watch glass (10), parallel to an axis perpendicular to the glasses (1, 2).

7. The watch glass (10) according to any one of the preceding claims, wherein the decorative member (3) protrudes beyond an upper side (18) of the watch glass (10).

8. The watch glass (10) according to any one of the preceding claims, wherein the first recess (41) and/or the second recess (42) each comprise a conical recess portion (410, 420) and a cylindrical recess portion (411, 421).

9. The watch glass (10) according to claim 8, wherein the first frame portion (61) abuts the conical recess portion (410) of the first recess (41), optionally with an interposed adhesive bond or an interposed sealing member, and in particular at the contact point with the conical recess portion (410) has a shape complementary thereto, and/or wherein the second frame portion (62) abuts the cylindrical recess portion (421) of the second recess (42), optionally with an interposed adhesive bond or an interposed sealing member, and in particular at the contact point with the cylindrical recess portion (421) has a shape complementary thereto.

10. A watch (100) comprising a watch glass (10) according to any one of the preceding claims.

## Revendications

1. Verre de montre (10) comprenant :
• un premier verre (1),
• un deuxième verre (2) relié au premier verre (1) par une couche intermédiaire de liaison (5),
• un élément décoratif (3) inséré dans une monture (6), et
• un évidement de verre de montre (4) formé par un premier évidement (41) dans le premier verre (1) et un deuxième évidement (42) dans le deuxième verre (2),
• dans lequel la monture (6) est disposée dans l'évidement de verre de montre (4),
• dans lequel un espace (40) de l'évidement de verre de montre (4) défini par le premier verre (1), le deuxième verre (2) et la monture (6) est rempli avec un matériau de liaison (50) de la couche intermédiaire de liaison (5) de sorte que la monture (6) est reliée au premier verre (1) et au deuxième verre (2) par le matériau de liaison (50),
dans lequel la monture (6) comprend une première partie de monture (61) et une deuxième partie de monture (62), la première partie de monture (6) et/ou la deuxième partie de monture (61) étant inclinées par rapport à un axe (102) perpendiculaire aux verres (1, 2).

2. Verre de montre (10) selon la revendication 1, dans lequel la monture (6) comprend au moins un évidement (65) formé dans une surface latérale (66) de la monture (6).

3. Verre de montre (10) selon la revendication 1 ou 2, dans lequel la deuxième partie de monture (62) présente une plus grande inclinaison que la première partie de monture (61).

4. Verre de montre (10) selon l'une quelconque des revendications 1 à 3, dans lequel la deuxième partie de monture (62) fait saillie au-delà d'un côté inférieur (28) du deuxième verre (2), en particulier au maximum de 20 %, de préférence au maximum de 10 %, de manière particulièrement préférée au maximum de 5 % d'une épaisseur (505) du verre de montre (10).

5. Verre de montre (10) selon l'une quelconque des revendications précédentes, dans lequel le premier évidement (41) et en particulier également le deuxième évidement (42) sont formés de manière continue.

6. Verre de montre (10) selon l'une quelconque des revendications précédentes, dans lequel l'élément décoratif (3) présente une dimension (300) qui est au moins 50 %, de préférence au moins 80 %, de manière particulièrement préférée au-delà de 100 % d'une épaisseur (505) du verre de montre (10), parallèlement à un axe perpendiculaire aux verres (1, 2).

7. Verre de montre (10) selon l'une quelconque des revendications précédentes, dans lequel l'élément décoratif (3) fait saillie au-delà d'un côté supérieur (18) du verre de montre (10).

8. Verre de montre (10) selon l'une quelconque des revendications précédentes, dans lequel le premier évidement (41) et/ou le deuxième évidement (42) comprend/comprennent chacun une partie d'évidement conique (410, 420) et une partie d'évidement cylindrique (411, 421).

9. Verre de montre (10) selon la revendication 8, dans lequel la première partie de monture (61) s'appuie contre la partie d'évidement conique (410) du premier évidement (41), le cas échéant avec un collage intermédiaire ou un élément d'étanchéité intermédiaire, et présente en particulier au point de contact avec la partie d'évidement conique (410) une forme complémentaire à celle-ci et/ou dans lequel la deuxième partie de monture (62) s'appuie contre la partie d'évidement cylindrique (421) du deuxième évidement (42), le cas échéant avec un collage intermédiaire ou un élément d'étanchéité intermédiaire, et présente en particulier au point de contact avec la partie d'évidement cylindrique (421) une forme complémentaire à celle-ci.

10. Montre (100) comprenant un verre de montre (10) selon l'une quelconque des revendications précédentes.
